**Europäisches Patentamt**

**European Patent Office**

**Office européen des brevets**

(11) Veröffentlichungsnummer: **0 376 224**
**A2**

## (12) EUROPÄISCHE PATENTANMELDUNG

(21) Anmeldenummer: **89123866.9**

(22) Anmeldetag: **23.12.89**

(51) Int. Cl.⁵: **B23Q 1/00, B23Q 7/00, B29C 45/17**

(30) Priorität: **30.12.88 AT 3202/88**

(43) Veröffentlichungstag der Anmeldung:
**04.07.90 Patentblatt 90/27**

(84) Benannte Vertragsstaaten:
**AT BE CH DE ES FR GB IT LI NL SE**

(71) Anmelder: **Engel Maschinenbau Gesellschaft m.b.H.**

**A-4311 Schwertberg(AT)**

(72) Erfinder: **Bauer, Reinhard, Dipl.-Ing.**
**Schlossparkgasse 1**
**A-3950 Gmünd(AT)**

(74) Vertreter: **Hofinger, Engelbert et al**
**Torggler-Hofinger Wilhelm-Greil-Strasse 16**
**A-6020 Innsbruck(AT)**

(54) **Vorrichtung zum automatischen Werkzeug- oder Teilewechsel an Maschinen.**

(57) Eine Vorrichtung zum automatischen Werkzeug-oder Teilewechsel an Maschinen, insbesondere zum Austauschen der Formwerkzeuge und der Zylinder von Spritzgießmaschinen (1) Ein Werkzeugträger ist als selbstfahrender Wagen (12). für den Transport der Austauschteile zwischen einem Lager und der Maschine (1) ausgebildet. Die Maschine (1) weist mindestens eine Andockvorrichtung auf, mittels der der Wagen (12) an der Maschine (1) kuppelbar und positionierbar ist. Die Andockvorrichtung wird von einem auf einer Schiene (7) der Maschine (1) geführten Schlitten (8) gebildet und ist entlang der Schiene (7) verfahrbar. Der Wagen (12) weist an mindestens einer Seite, vorzugsweise an zwei Längsseiten seines Rahmens (23) Kupplungen (15) auf, mit denen er mit der Andockvorrichtung der Maschine (1) kuppelbar und parallel zur Maschine (1) führbar ist. Weiters ist der Wagen (12) mit einem getrennten Fahrantrieb und einem Andockantrieb versehen.

Fig. 6

Die Erfindung bezieht sich auf eine Vorrichtung zum automatischen Werkzeug- oder Teilewechsel an Maschinen, insbesondere zum Austauschen der Formwerkzeuge und der Zylinder von Spritzgießmaschinen, mit einem Werkzeugträger, der als selbstfahrender Wagen mit einem vorzugsweise elektrischen Fahrantrieb für den Transport der Austauschteile zwischen einem Lager und der Maschine ausgebildet ist, wobei die Maschine mindestens eine Andockvorrichtung aufweist, mittels der der Wagen, der an mindestens einer Seite, vorzugsweise an zwei Längsseiten seines Rahmens Kupplungen aufweist, an der Maschine kuppelbar und parallel zur Maschine führbar ist.

Im Bestreben, eine Automatisierung des Materialflusses bei modernen Fertigungen zu erreichen, soll gemäß der Erfindung die Zuführung und Umrüstung von Produktionshilfseinrichtungen, wie z. B. Spritzgießformen oder Handlingköpfen, einer Spritzgießmaschine zur Maschine nicht mehr zur Gänze von Bedienungspersonen durchgeführt werden, was sich in der Vergangenheit als zeitraubend und fehleranfällig erwiesen hat.

Aufgabe der Erfindung ist es, eine Vorrichtung mit einem Wagen der eingangs erwähnten Art zu schaffen, wobei es möglich ist, den Werkzeugträger in einem Werkzeuglager mit den neuen Werkzeugen, beispielsweise Spritzgießformen und Handlingköpfen, für die nächste Produktion zu beladen und wobei der eigentliche Wechselvorgang an der Maschine automatisch und zu einem späteren Zeitpunkt erfolgt. Dabei soll der Wagen einfach und exakt neben der Spritzgießmaschine positioniert werden können.

Dies wird erfindungsgemäß dadurch erreicht, daß der Wagen neben dem Fahrantrieb mit Tragrädern, von denen mindestens eines angetrieben ist, einen separaten Andockantrieb aufweist, der von Luftkissen und mindestens einem, vorzugsweise allseitig drehbaren Antriebsrad gebildet wird.

Der Wechselvorgang wird von der Maschinensteuerung überwacht und ausgelöst und wird über die Betriebssoftware gesteuert. Dazu ist vorgesehen, daß die Steuerung des Wagens mit der Steuerung der Maschine über eine Schnittlinie verknüpfbar ist, sodaß die Wagensteuerung von der Maschinensteuerung initiiert wird.

Vorteilhaft ist vorgesehen, daß die Andockvorrichtung von einem auf einer Schiene der Maschine geführten Schlitten gebildet wird, wobei eine Steuervorrichtung vorgesehen ist, mittels der der Schlitten entlang der Schiene verfahrbar ist. Es kann dabei direkt der Schlitten angetrieben werden, der dann den Wagen mit sich rimmt. Es hat sich jedoch als vorteilhaft erwisen, daß der Antrieb über den Wagen erfolgt, wobei der Schlitten die Aufrechterhaltung der parallelen Stellung des Wagens zur Maschinenachse gewährleistet.

Vorteilhaft weist der Schlitten zwei Verankerungszapfen auf, an denen hakenartige Kupplungsteile des Wagens angreifen. Die Kupplungteile des Wagens sind vorteilhaft pneumatisch verriegel- und entriegelbar.

Zur Erleichterung des Andockens ist der Wagen im Bereich der Kupplungsteile mit V-förmigen Führungen versehen, in die die Verankerungszapfen einschiebbar sind.

Vorteilhaft ist weiter vorgesehen, daß an der Schiene Wegbegrenzer für den Schlitten in der Form von Anschlägen oder dgl. verstellbar angeordnet sind.

Die Maschine weist vorteilhaft einen rechteckigen Grundriß ohne hervorstehende Teile auf und ist in bezug auf eine vertikale Symmetrieachse symmetrisch ausgeführt. An jeder Seite befindet sich eine Schiene mit einem darauf verfahrbaren Schlitten. Durch diese Ausführung kann der Wagen sowohl an der Maschinenvorder- als auch an der Maschinenrückseite andocken. Die Entfernungen von der Lagerstelle des Werkzeuges am Wagen zur Festspannvorrichtung an der Maschine sind jeweils gleich.

Damit der Wagen an beiden Seiten der Maschine andocken kann, ist vorgesehen, daß an den beiden Längsseiten der Maschine spiegelbildlich gleich konstruierte Schutzgitter vorgesehen sind.

Vorteilhaft ist der Fahrantrieb des Wagens ein Elektroantrieb und der Andockantrieb ein Pneumatikantrieb. Durch diese Zweiteilung ist ein auf Millimeter genaues Annähern schwerer Lasten bei exakter Parallelität an die Spritzgießmaschine möglich. Der Wagen wird mit dem Fahrantrieb bis auf eine Distanz von 0,5 m - 1 m an die Spritzgießmaschine herausgefahren. Anschließend wird der Fahrantrieb ausgeschaltet und der pneumatische Andockantrieb eingeschaltet.

Die Tragräder des Wagens sind vorteilhaft jeweils in der Mitte einer Seite des Wagens angeordnet, wobei die an den beiden Stirnseiten des Wagens angeordneten Tragräder lenkbar sind. Diese Tragräder sind beispielsweise über ein Gestänge verbunden.

Es ist vorteilhaft ein Luftkissen in jeder Ecke des Wagens vorgesehen.

Das Antriebsrad, das den Wagen beim Andokken antreibt, ist vorteilhaft mit einem pneumatischen Antrieb gekuppelt.

Das Antriebsrad ist heb- und absenkbar, sodaß es als Reibrad mit dem Boden in Verbindung ist, wenn der Wagen durch die Luftkissen angehoben wird und die Tragräder keine Verbindung mehr mit dem Boden haben.

Vorteilhaft ist weiters vorgesehen, daß ein Schlauchanschluß zum Anschluß an eine Pneumatikleitung der Maschine vorgesehen ist, über den die Luftkissen gespeist werden.

Nachfolgend wird ein Ausführungsbeispiel der Erfindung anhand der Figuren der beiliegenden Zeichnungen eingehend beschrieben.

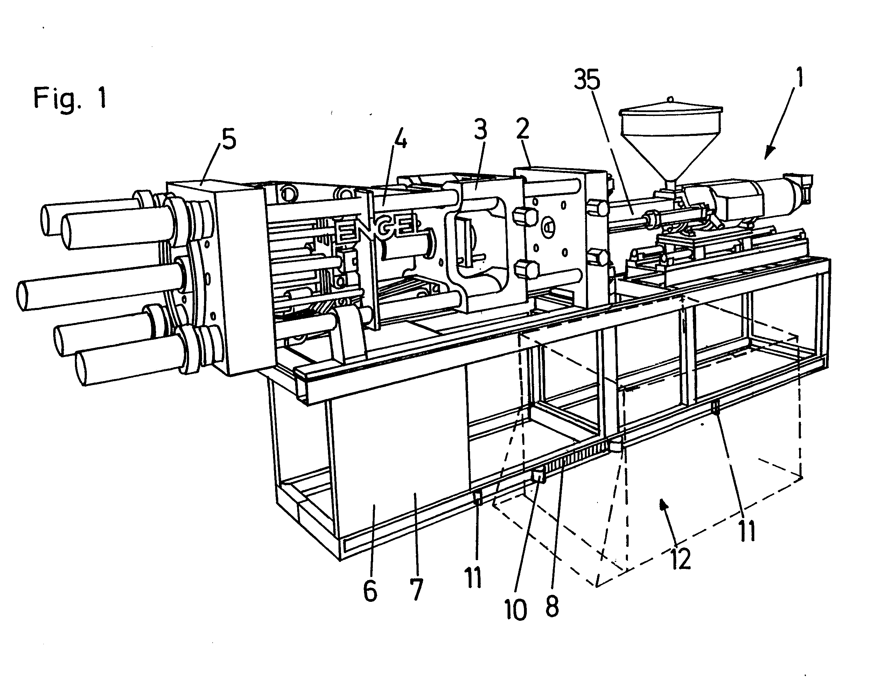

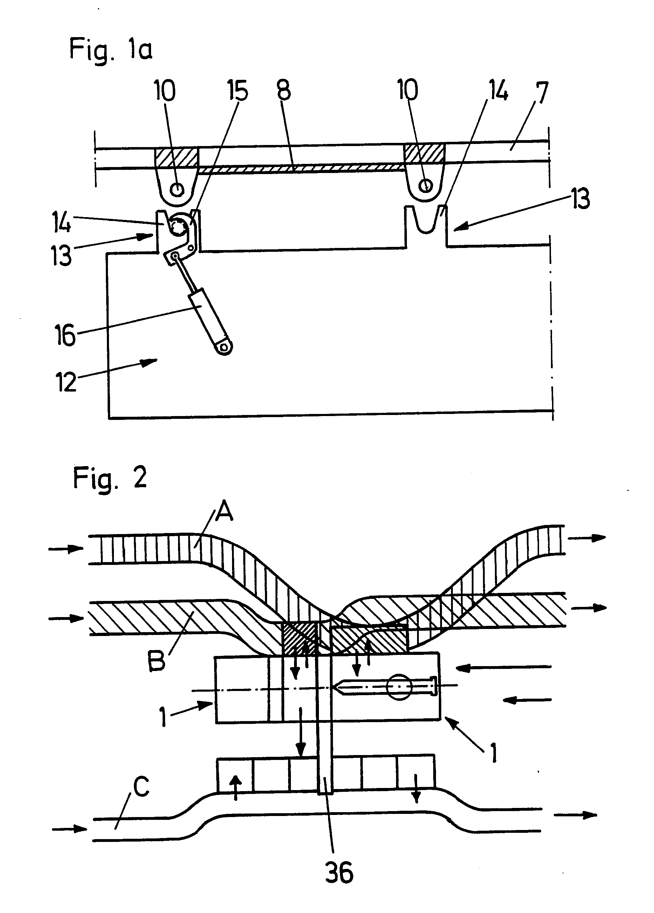

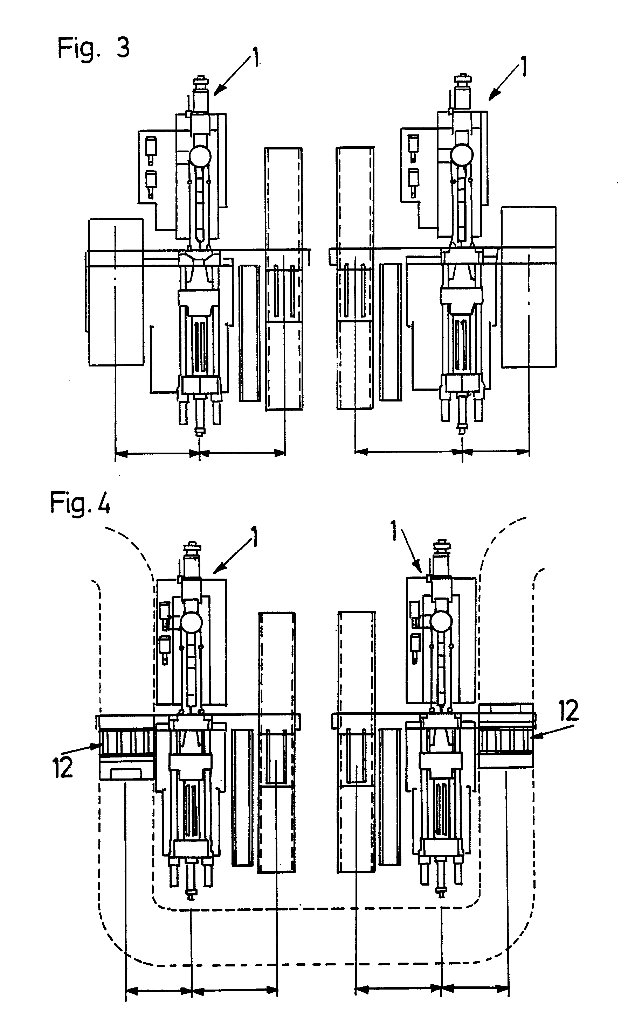

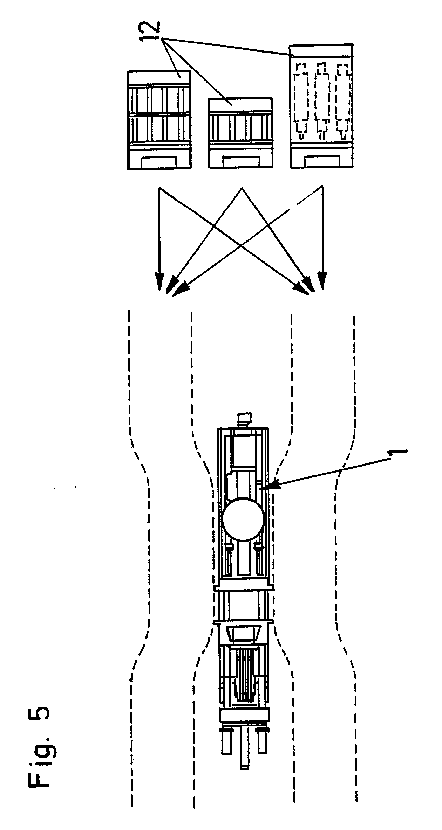

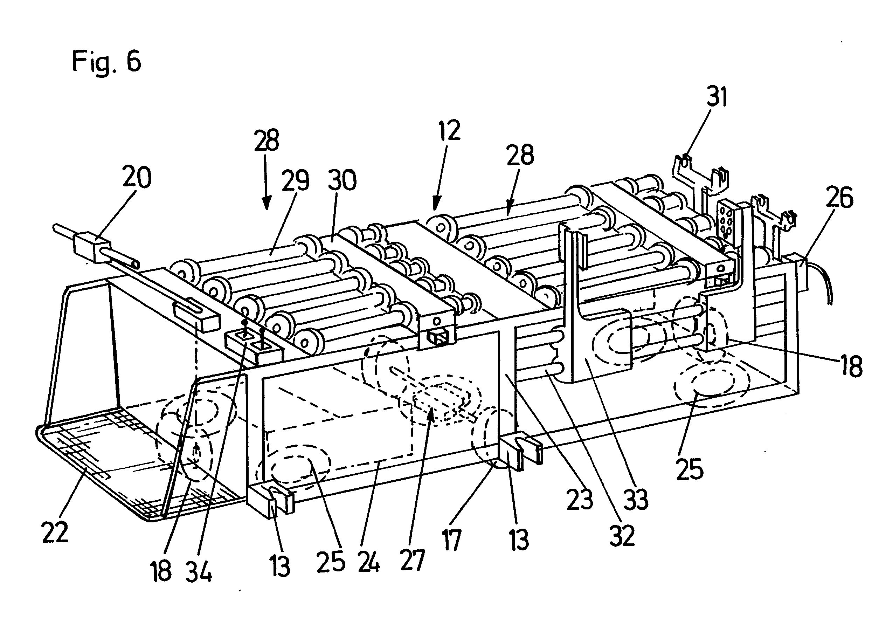

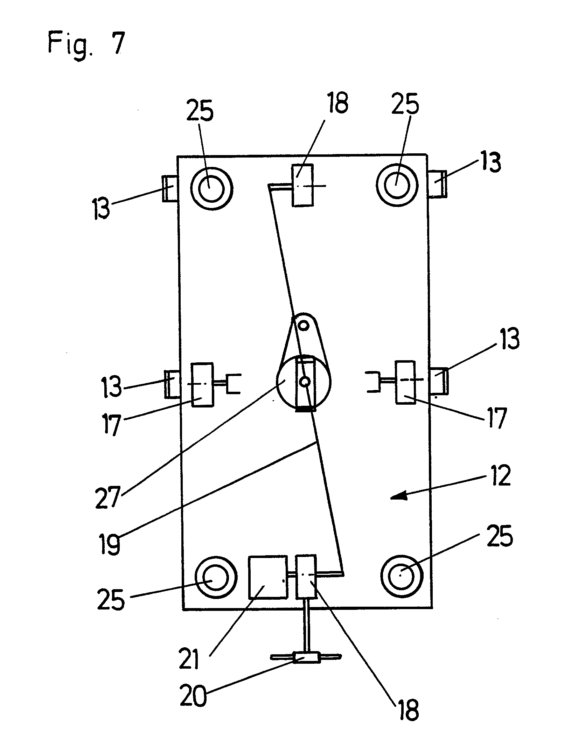

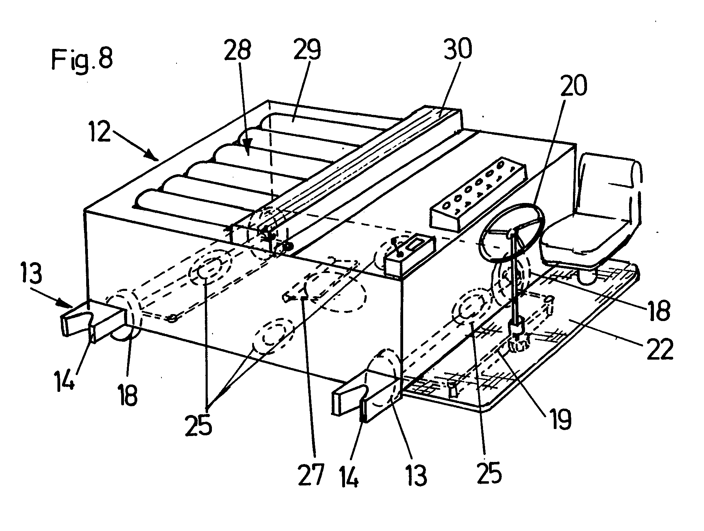

Die Fig. 1 zeigt ein schematisch gehaltenes Schaubild einer Spritzgießmaschine mit einer erfindungsgemäßen Andockvorrichtung, die Fig. 2 zeigt schematisch das Materialschlußschema einer Spritzgießmaschine mit einer erfindungsgemäßen Vorrichtung, die Fig. 3 zeigt schematisch das Schema einer Produktionsinsel mit einer herkömmlichen Spritzgießmaschine, die Fig. 4 zeigt schematisch eine Draufsicht auf eine Produktionsinsel mit einer Spritzgießmaschine mit erfindungsgemäßer Vorrichtung, die Fig. 5 zeigt schematisch ein weiteres Beispiel der Maschinenversorgung einer Spritzgießmaschine mit einer erfindungsgemäßen Vorrichtung, die Fig. 6 zeigt ein schematisch gehaltenes Schaubild des erfindungsgemäßen Wagens, die Fig. 7 zeigt eine Draufsicht von unten auf einen erfindungsgemäßen Wagen und die Fig. 8 zeigt ein Schaubild eines weiteren Ausführungsbeispieles eines erfindungemäßen Wagens.

Die Spritzgießmaschine 1, die Teil der erfindungsgemäßen Vorrichtung bildet bzw. mit einer solchen ausgestattet ist, weist in herkömmlicher Art und Weise einen Spritzzylinder 35, eine feststehende Formträgerplatte 2, eine auf Säulen 4 geführte bewegliche Formträgerplatte 3 und eine linke Formplatte 5 auf.

Diese Teile der Spritzgießmaschine 1 sowie die Schließeinrichtung sind gemäß dem bekannten Stand der Technik gefertigt.

Die Spritzgießmaschine 1 lagert auf einem rechteckigen Rahmen 6, wobei kein Teil der Spritzgießmaschine 1 seitlich über den Rahmen 6 hinausragt.

Am Rahmen 6 ist an jeder Seite unten eine Schiene 7 befestigt.

Auf jeder Schiene 7 ist ein Schlitten 8 verschiebbar. Jeder Schlitten 8 weist Laschen mit Verankerungszapfen 10 auf.

An den Schienen 7 sind verstellbar Anschläge 11 angeordnet, die als Endschalter den Verschiebeweg des Schlittens 8 begrenzen.

Die Medienanschlüsse (Strom, Öl, Druckluft) der Maschine sind vorteilhaft alle an einer Stirnseite der Maschine angeordnet.

Der Wagen 12 weist an beiden Längsseiten zwei Kupplungseinrichtungen 13 auf. Die Kupplungseinrichtungen 13 umfassen V-förmige Führungen 14, in welche die Verankerungsbolzen 10 einschiebbar sind und Haken 15, die die Verankerungsbolzen 10 umfassen.

Die Haken 15 sind mittels Pneumatikzylindern 16 verriegel- und entriegelbar. Der Wagen 12 ist weiters mit vier Tragrädern 17, 18 versehen. Beim Ausführungsbeispiel der Fig. 7 befinden sich die Tragräder 17, 18 jeweils in der Mitte einer Seite des Wagens 12.

Die Tragräder 18, die sich an den Stirnseiten des Wagens 12 befinden, sind über ein Gestänge 19 miteinander verbunden und über eine Lenkvorrichtung 20 lenkbar.

Eines der Tragräder 18 wird von einem Elektromotor 21 angetrieben.

Bei der Lenkeinrichtung 20 befindet sich eine Plattform 22 für die Bedienungsperson.

Hinter der Plattform 22 innerhalb des Rahmens 23 des Wagens 12 befinden sich die Batterien 24 für den Fahrantrieb.

An seinen vier Eckpunkten ist der Wagen 12 gemäß der Fig. 7 mit Luftkissen 25 versehen. Der Wagen 12 weist weiters Anschlußstecker 26 für die Kupplung mit Medienversorgungsleitungen der Maschine 1 auf. Über eine Medienversorgungsleitung wird Druckluft von der Maschine 1 zu den Luftkissen geführt.

In der Mitte des Wagens 12 befindet sich ein allseitig drehbares Antriebsrad 27. Das Antriebsrad 27 ist mit einem Pneumatikantrieb verbunden, der ebenfalls von der Maschine 1 her gespeist wird.

Wie aus der Fig. 6 ersichtlich, weist der Wagen 12 zwei Rollenbahnen 28 auf, auf deren Rollen 26 die Spritzgießformen bzw. der Spritzzylinder lagern.

Neben jeder Rollenbahn 28 befindet sich eine Teleskopquertransporteinrichtung 30, die wiederum pneumatisch angetrieben ist.

An der der Bedienungsplattform 22 gegenüberliegenden Stirnseite ist der Wagen 12 mit Halterungen 31 für die Handlingköpfe der Spritzgießmaschine (Maschine 1) versehen.

Bei einer Rollenlaufbahn befinden sich seitlich am Rahmen 23 Säulen 32, auf denen Kupplungsschlitten 33 für Heizmedien verschiebbar gelagert sind. Diese Kupplungsschlitten 33 sind Tile einer Formenvorwärmeeinrichtung und sind an die Formen anpreßbar.

Der wesentliche Bestandteil der erfindungsgemäßen Wechselvorrichtung für Spritzgießwerkzeuge und Handlingköpfe einer Spritzgießmaschine 1 ist der manngesteuerte, freiverfahrbare Wagen 12. Auf dem Wagen 12 wird im Magazin das Werkzeug für den nächsten Produktionsgang aufgeladen und auf einer Rollenbahn 28 positioniert. Der Wagen 12 wird dann frei zur Spritzgießmaschine 1 gefahren, wobei der Fahrantrieb verwendet wird, d. h. der Wagen 12 rollt auf den Tragrädern 17,18 und wird vom Elektroantrieb angetrieben. Die besondere Anordnung der lenkbaren Tragräder 18 bewirkt eine besondere Wendigkeit des Wagens 12.

Sobald der Wagen 12 den Andockbereich an der Maschinenvorder- oder Rückseite erreicht und der Wagen 12 durch manuelles Stecken von Elektro- und Pneumatiksteckern energieversorgungsmäßig mit der Spritzgießmaschine 1 verbunden worden ist, wird der Elektrofahrantrieb stillgelegt und der Luftkissenantrieb aktiviert, der den Wagen 12 ca. 10 bis 15 mm in die Höhe hebt, sodaß der Wagen 12 schwebt und die Tragräder 17,18 keine Bodenberührung haben. Über ein abnehmbares Bedienungspult 34 wird das in der Wagen mitte befindliche Antriebsrad 27 gesteuert. Mit dem Antriebsrad 27 ist der Wagen 12 in jeder Richtung, also auch quer zur eigentlichen Fahrrichtung des Elektroantriebs bewegbar und der Wagen 12 kann daher mit der Längsseite an die Maschinenlängsseite angenähert werden und mittels der Haken 15, die an den Bolzen 10 angreifen, mit dem Schlitten 8 gekuppelt werden.

Anschließend wird der Luftkissenantrieb abgestellt. Der Bedienungsmann kann nun die Spritzgußmaschine 1 und den Wagen 12 verlassen. Der weitere Funktionsablauf erfolgt automatisch über die Maschinensteuerung bzw. wird von der Betriebssoftware gesteuert. Dazu ist die Steuerung des Wagens über eine Schnittstelle mit der Steuerung der Maschine verknüpfbar. Beim Werkzeugwechsel wird die Steuerung des Wagens von der Steuerung der Maschine initiiert, das heißt, sie sitzt vollautomatisch ein.

Zu einem späteren Zeitpunkt, z.B. in der Nachtschicht, wird nach Beendigung der aktuellen Produktion das Schutzgitter an der Spritzgußmaschine 1 zum Wagen 12 hin geöffnet und die Formwerkzeuge werden vom Schnellspannsystem der Spritzgußmaschine 1 entkuppelt. Ein derartiges Schnellspannsystem ist in der AT-PS Nr 386 379 der Anmelderin beschrieben.

Vorher wurde der Wagen 12 über die Steuerung des Schlittens 8 an der Schiene 7 so positioniert, daß sich die freie Rollenbahn neben dem "alten" Werkzeug der Spritzgußmaschine 1 befindet. Anschließend wird der Teleskopquertransport 30 des Wagens 12 ausgefahren, das Spritzgießwerkzeug in der Spritzgießmaschine 1 mit dem Teleskopquertransport verbunden und auf den Wagen 12 gezogen und gesichert.

Sodann wird der Luftkissenantrieb 25 aktiviert und der Wagen 12 fährt entlang der Führungsschiene 7 bis zum zweiten Endschalter bzw. Anschlag 11, der die zweite Formwechselposition angibt.

Danach wird die Luftzufuhr zu den Luftkissen 25 wiederum gestoppt und der Wagen 12 abgesenkt.

Die "neue" Spritzgießform wird vom zweiten Quertransport in die Spritzgußmaschine 1 geschoben, der Quertransport entkuppelt und auf den Wagen 12 zurückgefahren und eingerastet.

Das Formwerkzeug kann vor dem Austausch, d. h. der Montage, in der Spritzgießmaschine 1 auf dem Wagen 12 vorgewärmt werden. Dazu dienen die Medienkupplungsschlitten 33, die auf den Säulen 32 verschoben und mit den Werkzeugen in Kontakt gebracht werden.

An den Schlittenauslegern sind Medienkuppelblöcke mit Wasser- und Elektrosteckern befestigt. Diese Kuppelblöcke werden gegen Adapterplatten der Spritzgießform, welche sich auf dem Wagen 12 im Beschickungsplatz befindet, angebrachten formenseitigen Medienkuppelblöcken bewegt und während des Vorwärmevorganges in Position gehalten. Die Versorgung mit dem temperierten Flüssigkeitsmedium (Wasser oder Öl) erfolgt über ein im Wagenrahmen eingebautes Temperiergerät, gleiches gilt für die Vorwärmung der in manchen Spritzgießformen befindlichen Widerstandsheizungen für sogenannte Heißkanäle. Beide Vorwärmegeräte werden über Schnittstellen von der Spritzgießmaschinensteuerung gestartet und gestoppt. Der Signalaustausch erfolgt über die von Hand aus steckbare Elektroverbindung, die in Zusammenhang mit dem Andockvorgang des Wagens 12 an die Spritzgießmaschine 1 hergestellt wird.

Nach dem Abschluß des Formwechselvorganges wird der Wagen 12 wiederum um eine Position weitergefahren und die Übernahmekopfwechselstation, d.h. die Träger 31 für die Handlingköpfe werden in den Handlingsverfahrenbereich gebracht. Das Handling legt den alten Handlingkopf ab, versetzt seitlich und übernimmt den neuen Handlingkopf.

Die Träger 31 für die Handlingköpfe könnten auch zwischen den beiden Rollenbahnen 28 angeordnet sein. Bei einer derartigen Anordnung ist kein weiteres Verfahren des Wagens 12 notwendig. Es ergibt sich jedoch eine größere Wagenlänge, da der Abstand zwischen den Rollenbahnen 28 vergrößert ist.

Nach erfolgtem Wechselvorgang wird die neue Produktion automatisch gestartet.

Der Wagen 12 kann zu einem späteren Zeitpunkt von der Maschine 1 zu dem zentralen Werkzeuglager gefahren und für den nächsten Einsatz vorbereitet werden.

In der Fig. 2 ist schematisch das Materialflußschema für die Spritzgießmaschine 1 gezeigt, und zwar versinnbildlicht das Band A den Weg der Massezylinder 35, das Band B den Weg der Spritzgießformen und das Band C versinnbildlicht das Transportsystem für die Spritzgießteile, die von einer Handlingeinrichtung 36 von der Maschine 1 abgenommen werden.

Aus der Gegenüberstellung der Fig. 3 und 4 ist die Bedeutung des rechtwinkeligen Grundrisses der Spritzgießmaschine 1 ersichtlich. Bei der erfindungsgemäßen Spritzgießmaschine 1 ist der Werkzeughub an jeder Seite gleich, sodaß der Wagen 12 für den Werkzeugaustausch sowohl an der Maschinenvorderseite als auch an der Maschinenrückseite an die Spritzgießmaschine 1 angedockt werden kann.

Bei einer Spritzgießmaschine nach demstandder Technik,wie sie in der Fig. 3 dargestellt ist, ist der Schutzgitterabstand zur Maschinenmitte verschieden. Dadurch ergeben sich unterschiedliche Werkzeugeinschubwege und Wege der Handling-Z-Achse. Ein automatischer Werkzeugwechsel an beiden Maschinenseiten ist nicht möglich.

Die Fig. 5 zeigt eine weitere Variante der Maschinenversorgung im Schema, wobei verschiedene Wägen 12, die entweder als Werkzeugwechselwagen oder als Zylinderwechselwagen ausgeführt sind, an beiden Seiten der Spritzgießmaschine 1 angedockt werden.

Die Fig. 8 zeigt eine vereinfachte Version des Wagens 12, der nur mit einer Rollbahn 28 ausgestattet ist. Ebenso ist konsequenterweise nur ein Quertransport 30 vorgesehen. Die Anordnung der Luftkissen 25 und der Räder 18 ist genau umgekehrt wie beim Ausführungsbeispiel nach den Fig 6 und 7. Die Luftkissen 25 befinden sich jeweils in der Mitte der Seiten des Wagens 12. Die Räder 18 befinden sich in den vier Wagenecken und sind alle über Gestänge 19 lenkbar. Das Andockrad 27, das pneumatisch angetrieben wird, befindet sich wiederum in der Mitte des Fahrzeuges.

Die Kupplungseinrichtungen 13 sind analog dem Ausführungsbeispiel nach den Fig. 6 und 7 ausgeführt.

Der Wagen 12 ist wiederum mit einer Plattform 22 für die Bedienungsperson und einer Lenkung 20 versehen. Ebenso weist der Wagen 12 wiederum Elektro- und Pneumatikanschlüsse auf.

## Ansprüche

1. Vorrichtung zum automatischen Werkzeug- oder Teilewechsel an Maschinen, insbesondere zum Austauschen der Formwerkzeuge und der Zylinder von Spritzgießmaschinen, mit einem Werkzeugträger, der als selbstfahrender Wagen (12) mit einem vorzugsweise elektrischen Fahrantrieb für den Transport der Austauschteile zwischen einem Lager und der Maschine (1) ausgebildet ist, wobei die Maschine (1) mindestens eine Andockvorrichtung aufweist, mittels der der Wagen (12), der an mindestens einer Seite, vorzugsweise an zwei Längsseiten seines Rahmens Kupplungen aufweist, an der Maschine (1) kuppelbar und parallel zur Maschine führbar ist, dadurch gekennzeichnet, daß der Wagen (12) neben dem Fahrantrieb mit Tragrädern (17,18) , von denen mindestens eines angetrieben ist, einen separaten Andockantrieb aufweist, der von Luftkissen (25) und mindestens einem, vorzugsweise allseitig drehbaren Antriebsrad (27) gebildet wird.

2. Vorrichtung nach Anspruch 1, dadurch gekennzeichnet, daß die Andockvorrichtung von einem auf einer Schiene (7) der Maschine (1) geführten Schlitten (8) gebildet wird.

3. Vorrichtung nach Anspruch 2, gekennzeichnet durch eine Steuereinrichtung, mittels der der Schlitten (8) entlang der Schiene (7) verfahrbar ist.

4 Vorrichtung nach den Ansprüchen 1 und/oder 3, dadurch gekennzeichnet, daß der Schlitten (8) zwei Verankerungszapfen (10) aufweist, an denen hakenartige Kupplungsteile (15) des Wagens (12) angreifen.

5. Vorrichtung nach Anspruch 4, dadurch gekennzeichnet, daß der Wagen (12) im Bereich der Kupplungsteile (15) mit V-förmigen Führungen (14) versehen ist, in die die Verankerungszapfen (10) einschiebbar sind.

6. Vorrichtung nach Anspruch 2, dadurch gekennzeichnet, daß an der Schiene (7) Wegbegrenzer für den Schlitten (8) in der Form von Anschlägen (11) od. dgl. verstellbar angeordnet sind.

7. Vorrichtung nach mindestens einem der Ansprüche 1 bis 6, dadurch gekennzeichnet, daß an der Maschine (1) und am Wagen (12) Anschlüsse für Druckluft und Strom vorgesehen sind, die miteinander kuppelbar sind, sodaß der Wagen (12) an die Energieversorgung der Maschine (1) anschließbar ist.

8. Vorrichtung nach Anspruch 2, dadurch gekennzeichnet, daß die Maschine (1) in bezug auf eine vertikale Symmetrieebene symmetrisch ausgeführt ist und daß sich an jeder Seite eine Schiene (7) mit darauf verfahrbarem Schlitten (8) befindet.

9. Vorrichtung nach mindestens einem der Ansprüche 1 bis 8, dadurch gekennzeichnet, daß die Maschine (1) keine über die Schiene (7) oder Schienen (7) hinausstehenden Teile aufweist.

10. Vorrichtung nach Anspruch 10, dadurch gekennzeichnet, daß die Maschine (1) einen rechteckigen Maschinenrahmen (6) und keine seitlich über den Maschinenrahmen (6) ragende Teile aufweist.

11. Vorrichtung nach den Ansprüchen 2 und 10, dadurch gekennzeichnet, daß die Schiene (7) am unteren Rand des Maschinenrahmens (6) angeordnet ist.

12. Vorrichtung nach mindestens einem der Ansprüche 1 bis 11, dadurch gekennzeichnet, daß sämtliche Medienanschlüsse der Maschine (1) an einer Maschinenschmalseite angeordnet sind.

13. Vorrichtung nach einem der Ansprüche 1 bis 12, dadurch gekennzeichnet, daß an den beiden Längsseiten der Maschine (1) spiegelbildlich gleich konstruierte Schutzgitter vorgesehen sind.

14. Vorrichtung nach Anspruch 13, dadurch gekennzeichnet, daß die Schutzgitter und die Bedienungstasterkassette für den Betrieb der Spritzgießmaschine an dieser spiegelbildlich angebracht sind.

15. Vorrichtung nach Anspruch 7, dadurch gekennzeichnet, daß die Anschlüsse für Druckluft und Strom für den Wagen vorzugsweise spiegelbildlich an beiden Längsseiten der Spritzgießmaschine angeordnet sind.

16. Wagen nach Anspruch 1, dadurch gekennzeichnet, daß die Tragräder (17,18) des Wagens (12) jeweils in der Mitte einer Seite des Wagens (12) angeordnet sind.

17. Wagen nach Anspruch 16, dadurch gekennzeichnet, daß die an den beiden Stirnseiten des Wagens (12) angeordneten Tragräder (18) lenkbar sind.

18. Wagen nach Anspruch 17, dadurch gekennzeichnet, daß die beiden Tragräder (18) über ein Gestänge (19) verbunden sind.

19 Wagen nach Anspruch 1, dadurch gekennzeichnet, daß in jeder Ecke des Wagens (12) ein Luftkissen (25) vorgesehen ist.

20. Wagen nach Anspruch 1, dadurch gekennzeichnet, daß das Antriebsrad (27) mit einem pneumatischen Antrieb gekuppelt ist.

21. Wagen nach Anspruch 20, dadurch gekennzeichnet, daß das Antriebsrad (27) heb- und senkbar ist.

22. Wagen nach Anspruch 1, dadurch gekennzeichnet, daß ein Schlauchanschluß (26) zum Anschluß an eine Druckluftleitung der Maschine (1) vorgesehen ist, über den die Luftkissen (25) gespeist werden.

23. Vorrichtung nach Anspruch 7, dadurch gekennzeichnet, daß die Steuerung des Wagens (12) mit der Steuerung der Maschine (1) über eine Schnittstelle verknüpfbar ist, sodaß die Wagensteuerung von der Maschinensteuerung initiiert wird.

Fig. 1

Fig. 1a

Fig. 2

Fig. 3

Fig. 4

12

12

Fig. 5

EP 0 376 224 A2

Fig. 6

EP 0 376 224 A2

Fig. 7

Fig.8

28  29  30

12

20

13

18

14  18

25

27  14  13  25

19

18

22

EP 0 376 224 A2